# EUROPÄISCHE PATENTSCHRIFT

(11) **EP 3 902 635 B1**
(45) Veröffentlichungstag und Bekanntmachung des Hinweises auf die Patenterteilung: **19.06.2024**
(21) Anmeldenummer: 19835664.4
(22) Anmeldetag: 23.12.2019
(51) Int. Cl.: B05C 5/02, B05C 11/10, B05B 1/30, B05B 1/08, F16K 31/06, F16K 31/12

(54) **JET-DOSIERVENTIL**
JET DOSING VALVE
SOUPAPE DE DOSAGE À JET

(30) Priorität: 27.12.2018 DE 102018133606
(43) Veröffentlichungstag der Anmeldung: 03.11.2021
(73) Patentinhaber: Perfecdos GBR, 82544 Ergertshausen (DE)
(72) Erfinder: FRIEDL, Peter, 83623 Dietramszell (DE)
(74) Vertreter: Grättinger Möhring von Poschinger Patentanwälte Partnerschaft mbB
(86) Internationale Anmeldenummer: PCT/EP2019/086921
(87) Internationale Veröffentlichungsnummer: WO 2020/136167

(56) Entgegenhaltungen:
- EP-A1- 1 155 748
- US-A- 4 678 100
- US-A1- 2012 273 071

## Beschreibung

Die vorliegende Erfindung betrifft ein Dosierventil zum Ausstoßen einer Flüssigkeit aus einem Düsenaustrittskanal des Dosierventils, insbesondere zum dosierten und berührungslosen Auftragen einer Flüssigkeit auf eine Oberfläche, wobei das Dosierventil einen Grundkörper, ein innerhalb des Grundkörpers bewegliches Ventilbetätigungselement und ein mit dem Ventilbetätigungselement verbundenes oder durch dieses betätigbares Ventilverschlusselement aufweist. Dabei ist das Ventilverschlusselement innerhalb einer Dosierkammer zwischen einer von einem Düsendichtsitz abgehobenen Öffnungsstellung und einer dem Düsendichtsitz anliegenden Schließstellung bewegbar, um beim Übergang aus seiner Öffnungsstellung in die Schließstellung einen Ausstoß von Flüssigkeit aus dem Düsenaustrittskanal des Dosierventils zu bewirken. Ferner ist zur pneumatischen Ansteuerung des Dosierventils ein Schaltventil vorgesehen, mit welchem ein Arbeitsraum des Dosierventils wahlweise entlüftet oder mit einem Druckfluid beaufschlagt werden kann.

Derartige Dosierventile, die häufig auch als "Jet-Dosierventile" oder "Mikrodosierventile" bezeichnet werden, sind aus dem Stand der Technik hinlänglich bekannt, z.B. aus der EP 1 029 626 B1, und dienen dem präzisen Auftragen von Kleinstmengen (z.B. im Nanoliter- oder Mikroliterbereich) einer Flüssigkeit auf eine Oberfläche, was insbesondere in industriellen Fertigungsprozessen vielfältige Anwendungsmöglichkeiten hat.

Bei der mittels eines solchen Dosierventils aufzutragenden Flüssigkeit kann es sich grundsätzlich um beliebige Flüssigkeiten, insbesondere aber auch um hochviskose Flüssigkeiten (wie z.B. Klebstoff, Schmiermittel, etc.), handeln.

Die Dosierkammer des Dosierventils bildet ein Flüssigkeitsreservoir für die auszustoßende Flüssigkeit oder steht mit einem separaten, typischerweise druckbeaufschlagen Flüssigkeitsreservoir in fluidleitender Verbindung und weist einen Düsenaustrittskanal auf, welcher durch das in Schließstellung befindliche Ventilverschlusselement versperrt und beim Abheben des Ventilverschlusselements von dem Düsendichtsitz freigegeben wird. Der eigentliche Dosiervorgang erfolgt durch Ausstoß eines Flüssigkeitstropfens an einem offenen Ende des Düsenaustrittskanals, indem das zuvor aus seiner Schließstellung in die Öffnungsstellung angehobene Ventilverschlusselement zusammen mit der zwischen Ventilverschlusselement und Düsenaustrittskanal befindlichen Flüssigkeit stark in Richtung des Düsendichtsitzes beschleunigt wird.

Wird nun das Ventilverschlusselement beim Betrieb des Dosierventils zunächst aus seiner Schließstellung in seine Öffnungsstellung überführt, also vom Düsendichtsitz um einen geeignet vorgegebenen Hub angehoben, so ergibt sich dabei - je nach Geschwindigkeit des Anhebevorgangs und der Viskosität der Flüssigkeit - ein gewisser Rückfluss an Flüssigkeit aus dem Düsenaustrittskanal in die Dosierkammer, wobei dieser Rücksaug-Effekt mit größer werdendem Abstand des Ventilstößels von dem Düsendichtsitz verringert. Gleichzeitig bzw. anschließend kann dann Flüssigkeit aus dem Flüssigkeitsreservoir bzw. der übrigen Dosierkammer in den Raum unterhalb des Ventilstößels sowie in den Düsenaustrittskanal nachströmen, was typischerweise dadurch befördert wird, dass die im Flüssigkeitsreservoir befindliche Flüssigkeit geeignet mit Druck beaufschlagt wird.

Dünnflüssige Medien, wie z.B. Wasser oder Alkohol, dringen beim Anheben des Ventilstößels vergleichsweise schnell in den Düsenaustrittskanal ein und können bereits mit geringem Zeitverzug an dessen Ende ausflie-βen. Hochviskose Medien, wie z.B. Klebstoffe auf Epoxy- oder Silikon-Basis, füllen den Düsenaustrittskanal vergleichsweise langsam auf.

Zu lange Öffnungszeiten des Dosierventils sollten bei dessen Betrieb also möglichst vermieden werden, da eine am offenem Ende des Düsenaustrittskanals bereits austretende Flüssigkeit die Oberflächenspannungsverhältnisse im Austrittsbereich so ändert, dass beim Ausstoß der Flüssigkeit an der Kante der Düsenaustrittsöffnung abgelenkt würde, was die Präzision des Dosier- und Ausstoßvorgangs nachteilig beeinflusst.

Beim Schließen des Dosierventils wird das Ventilverschlusselement in Richtung zum Düsendichtsitz beschleunigt, wobei die in der Dosierkammer befindliche Flüssigkeit dabei grundsätzlich sowohl innerhalb der Dosierkammer verdrängt wird (bzw. in Richtung zu einem separaten Flüssigkeitsreservoir strömen kann) als auch in Richtung zum Düsenaustrittskanal strömen kann. Der beim Schließvorgang immer enger werdende Spalt zwischen dem Ventilverschlusselement und dem Düsendichtsitz behindert dann jedoch sukzessive den Rückfluss des Mediums in Richtung zum Flüssigkeitsreservoir, so dass in der Schlussphase des Schließvorgangs der Fluidpfad durch den Düsenaustrittskanal der Flüssigkeit den geringsten Fließwiderstand entgegensetzt, so dass das beschleunigte Medium schließlich in den Düsenaustrittskanal gedrückt wird.

Zum Ende des Schließvorgangs, d.h. wenn das Ventilverschlusselement unter Anlage am Düsendichtsitz seine Schließstellung einnimmt, folgt die zuvor beschleunigte Flüssigkeitssäule weiterhin der gegebenen Bewegungsrichtung. Da bei in Schließstellung befindlichem Ventilverschlusselement plötzlich kein Material mehr aus dem Flüssigkeitsreservoir oder dem oberhalb des Düsendichtsitzes befindlichen Teil der Dosierkammer in den Düsenaustrittskanal nachströmen kann, schnürt sich der durch den Düsenaustrittskanal aus dem Dosierventil austretende Flüssigkeitsstrahl seitlich ein und reißt letztlich ab, was als Tropfenabriss bezeichnet wird. Dieser Tropfen fliegt sodann in Bewegungsrichtung weiter bis er an der gewünschten Position auf der Oberfläche auftrifft, auf welche er appliziert werden sollte.

Zu beachten ist dabei, dass die Oberflächenspannung der zu dosierenden Flüssigkeit dem vorbeschriebenen Ablauf entgegenwirken kann, so dass z.B. bei unzureichender Austrittsgeschwindigkeit kein Tropfen abreißen kann und die Flüssigkeit in den Düsenaustrittskanal zurückfedert und dort als nicht dosierter Rückstand (insbesondere im Bereich der Düsenaustrittskanalmündung) zurückbleibt. Nachfolgende Tropfen werden hierdurch zusätzlich behindert.

Dieser Umstand und die Tatsache, dass mit steigender Viskosität der zu dosierenden Flüssigkeit auch deren Fließwiderstand durch den Düsenaustrittskanal steigt, erfordert daher in der Regel eine möglichst schnelle und kräftige Schließbewegung des Ventilverschlusselements. Bei der häufig gewünschten Dosierung von Kleinstmengen im Nanoliterbereich kommt hinzu, dass hierfür der Düsenaustrittskanal besonders klein zu bemessen ist, was die Anforderungen an einen möglichst schnellen Schließvorgang zusätzlich erhöht.

Die zum Betrieb des Dosierventils erforderliche Bewegung des Ventilverschlusselements zwischen seiner Öffnungsstellung und seiner Schließstellung wird im Rahmen der vorliegenden Erfindung pneumatisch unter Zuhilfenahme eines Schaltventils gesteuert, mit welchem ein geeignet innerhalb des Grundkörpers des Dosierventils angeordneter Arbeitsraum wahlweise entlüftet oder mit einem Druckfluid belüftet werden kann. Das (durch das Ventilbetätigungselement betätigte oder ggfs. einteilig mit diesem ausgebildete) Ventilverschlusselements des Dosierventils kann dabei in üblicher Weise mittels einer Feder entweder in die Öffnungsstellung oder in die Schließstellung vorgespannt sein, so dass das Ventilverschlusselement - abhängig von der Richtung der Federvorspannung und der Richtung der bei belüftetem Arbeitsraum auf das Ventilbetätigungselement ausgeübten Kraft - durch Be- oder Entlüftung des Arbeitsraums zwischen Schließstellung und Öffnungsstellung bewegt werden kann.

Typischerweise ist das Ventilverschlusselement eines gattungs- und erfindungsgemäßen Dosierventils fest mit dem Ventilbetätigungselement verbunden oder einteilig mit diesem ausgebildet, wobei es auch Varianten von Jet-Dosierventilen gibt, bei denen ein separates Ventilbetätigungselement das Ventilverschlusselement betätigt. Dabei sind Ventilbetätigungselement und Ventilverschlusselement als einzelne Bauteile ausgeführt und in einer Funktionsstellung voneinander beabstandet. Zur Beschleunigung des Ventilbetätigungselements aus seiner Funktions- in die Schließstellung wird dann zunächst allein das Ventilbetätigungselement in Richtung zum Ventilverschlusselement beschleunigt und mit diesem zur Kollision gebracht , um das Ventilverschlusselement durch den bei der Kollision gegebenen Impulsübertrag rückartig in Richtung seiner Schließstellung zu beschleunigen (vgl. EP 2 143 503 A1).

Im Stand der Technik kommen als Schaltventil für pneumatisch angesteuerte Jet-Dosierventile unter Berücksichtigung der hierfür benötigten Funktionalität weit überwiegend 3/2-Wegeventile in Form von Magnetventilen zum Einsatz, welche sich durch drei Anschlüsse (Druckfluidanschluss, Entlüftungsanschluss und Arbeitsanschluss zur Herstellung der Verbindung zum Arbeitsraum des Dosierventils) und zwei verschiedene Schaltstellungen (zur wahlweisen Be- und Entlüftung des mit dem Arbeitsraum verbundenen Arbeitsanschlusses) auszeichnen.

Die maximal möglichen Schließgeschwindigkeiten sind bei elektropneumatisch betrieben Ventilen durch enge Querschnitte im Schalt- bzw. Magnetventil begrenzt. Magnetventile mit besonders großen Querschnitten weisen prinzipbedingt größere Schaltzeiten auf und sind damit nicht für die Kleinstmengendosierung geeignet, insbesondere wenn hochviskose Flüssigkeiten dosiert abgegeben werden sollen. Durch immer höher werdende Anforderungen der Industrie stoßen elektropneumatisch betriebene Jet-Dosierventile daher immer häufiger an Ihren Grenzen.

Aufwändige Dosierventile mit Piezoantrieb werden den technischen Anforderungen zwar gerecht, jedoch verkompliziert der prinzipbedingt geringe Arbeitshub solcher Schaltventile von i.d.R. 50-200µm alle bei der Herstellung und Betrieb des Systems beteiligten Prozesse, und führt somit zu hohen Gesamt-Prozesskosten.

Weiterhin wurde im Stand der Technik gemäß EP 2 813 293 A1 bereits vorgeschlagen, dass zur pneumatischen Ansteuerung eines gattungsgemäßen Dosierventils auch mehrere (jeweils als Magnetventil ausgeführte) parallelgeschaltete Schaltventile verwendet werden können, um durch Parallelschaltung mehrerer Ventile den für die Schaltvorgänge zur Verfügung stehenden Mengenstrom an Druckfluid zu erhöhen und/oder um durch variables Timing der einzelnen Magnetventile eine verbesserte Einstellbarkeit der Ventildynamik zu erzielen. Diese Lösung benötigt jedoch in nachteiliger Weise einen vergleichsweise großen Bauraum. Zudem erweist sich die Verwendung mehrerer Schaltventile als apparativ aufwändig, da hierbei insbesondere eine Mehrzahl an einzelnen Ventilen in synchronisierter Weise gesteuert werden müssen.

Weiterhin ist es aus den Druckschriften DE 10 2004 031 854 A1, DE 10 2015 000 630 B3, WO 2013/066687 A1, WO 2013/157940 A1, WO 2015/036096 A1 und DD 252869 A1 bereits bekannt, dass gattungsgemäße Dosierventile in verschiedenen Verschaltungsarten auch unter Zuhilfenahme eines 5/2-Wegeventils als Schaltventil betrieben werden können. Die dabei jeweils im Konkreten gegebene Verschaltung des 5/2-Wegeventils unterscheidet sich jedoch maßgeblich von der vorliegenden Erfindung.

Und schließlich ist aus der US 4,678,100 A noch ein Dosierventil bekannt, bei welchem zur Einstellung des Hubs des Schließelements und damit der Durchflussrate des gezeigten Dosierventils mit zwei Steuerventilen insgesamt vier Arbeitsräume wahlweise be- oder entlüftet werden können, was apparativ aufwändig ist. Weitere Dosierventile sind aus der US 2012/0273071 A1 und der EP 1 155 748 A1 bekannt.

Vor diesem Hintergrund ist es die Aufgabe der vorliegenden Erfindung ein möglichst einfach gestaltetes Dosierventil der vorstehend erläuterten Art bereitzustellen, welches bei möglichst geringer Baugröße eine Schaltcharakteristik aufweist, die sich insbesondere gut zur berührungslosen Jet-Dosierung von Kleinstmengen einer hochviskosen Flüssigkeit eignet.

Diese Aufgabe wird mit einem Dosierventil nach Anspruch 1 gelöst, welches sich neben den bereits eingangs genannten Merkmalen dadurch auszeichnet, dass das Schaltventil als Wegeventil mit zwei Schaltstellungen und wenigstens fünf Anschlüssen ausgestaltet und derart verschaltet ist, dass in einer ersten Schaltstellung des Schaltventils der Arbeitsraum des Dosierventils gleichzeitig entweder mit wenigstens zwei entlüfteten oder mit wenigstens zwei mit Druckfluid beaufschlagten Anschlüssen des Schaltventils verbunden ist, während in einer zweiten Schaltstellung des Schaltventils der Arbeitsraum des Dosierventils entweder mit einem mit Druckfluid beaufschlagten oder mit einem entlüfteten Anschluss des Schaltventils verbunden ist.

Bei dem erfindungsgemäßen Dosierventil ist somit vorgesehen, dass der Arbeitsraum des Dosierventils in einer ersten Schaltstellung des Schaltventils, die in besonders zweckmäßiger Weise zum Schließen des Dosierventils benutzt wird, gleichzeitig mit wenigstens zwei belüfteten oder mit wenigstens zwei entlüfteten Anschlüssen des Schaltventils fluidleitend verbunden wird, womit sich ein besonders schneller und kräftiger Schließvorgang realisieren lässt, was insbesondere zur Jet-Dosierung von hochviskosen Flüssigkeiten von Vorteil ist.

Ferner ist erfindungsgemäß vorgesehen, dass der Arbeitsraum in der zweiten Schaltstellung des Schaltventils, die typischerweise zum Öffnen des Dosierventils benutzt wird, mit (genau) einem be- oder entlüfteten Anschluss des Schaltventils verbunden ist, womit ein (im Vergleich zum Schließvorgang) sanft erfolgender Öffnungsvorgang erzielbar ist. Dies erweist sich wiederum insbesondere zum dosierten Abgeben von hochviskosen Flüssigkeiten, wie Klebstoffen, als vorteilhaft, da aufgrund des vergleichsweise sanften Öffnungsvorgangs ein Ansaugen von Luftblasen durch den Düsenaustrittskanal in die Flüssigkeit während des Öffnungsvorgangs wirksam vermieden werden kann.

So kann im Rahmen der vorliegenden Erfindung auf einfache Weise eine Schaltcharakteristik erzielt werden, die sich besonders gut zum dosierten Applizieren von hochviskosen Flüssigkeiten auf Oberflächen eignet, wobei die erfindungsgemäße Ventilgestaltung noch weitere Vorteile hat, die weiter unten anhand der in den Figuren gezeigten Ausführungsbeispiele noch näher erläutert werden.

Da das erfindungsgemäß zur Verwendung kommende Schaltventil lediglich zwei Schaltstellungen bereitstellen muss, kann dieses mit einem einzigen Schaltventilbetätigungselement realisiert sein, was den apparativen und schaltungstechnischen Aufwand klein hält.

Bei dem im Rahmen der vorliegenden Erfindung verwendeten Schaltventil handelt es sich in besonders bevorzugter Weise um ein 5/2-Wegeventil, welches genau fünf Anschlüsse und zwei Schaltstellungen aufweist. Derartige 5/2-Wegeventile sind im Übrigen in besonders kompakten Bauformen und mit geeigneter Ventildynamik kommerziell erhältlich.

Ferner ist im Rahmen der vorliegenden Erfindung bevorzugt vorgesehen, dass das Ventilbetätigungselement des Dosierventils ein innerhalb des Grundkörpers linear verschiebbarer Kolben ist und dass das Ventilverschlusselement ein Ventilstößel ist, womit eine mechanisch einfache Bauform für das Dosierventil realisierbar ist.

Außerdem ist bevorzugt vorgesehen, dass die Dosierkammer des erfindungsgemäßen Dosierventils über einen Flüssigkeitszufuhrkanal mit einem (vorteilhaft druckbeaufschlagten) Flüssigkeitsreservoir verbunden ist.

Im Rahmen einer ersten, besonders zweckmäßigen Ausführungsvariante eines erfindungsgemäßen Ventils, bei dem als Schaltventil ein 5/2-Wegeventil Verwendung findet, kann ferner vorgesehen sein, dass das Ventilverschlusselement (bzw. der Ventilstößel) mittels einer am Ventilverschlusselement (bzw. am Ventilstößel) oder am Ventilbetätigungselement (bzw. am Kolben) angreifenden Feder in seine Öffnungsstellung vorgespannt ist und dass von den insgesamt fünf Anschlüssen des Schaltventils ein erster und zweiter Anschluss des Schaltventils miteinander verbunden und gemeinsam an eine Druckfluidversorgung angeschlossen sind, ein dritter und vierter Anschluss des Schaltventils mit dem Arbeitsraum des Dosierventils verbunden sind und ein fünfter Anschluss des Schaltventils an eine Entlüftung angeschlossen ist.

Im Rahmen einer zweiten, demgegenüber alternativen und ebenfalls besonders zweckmäßigen Ausführungsvariante eines erfindungsgemäßen Ventils, bei dem als Schaltventil ein 5/2-Wegeventil Verwendung findet, kann vorgesehen sein, dass das Ventilverschlusselement (bzw. der Ventilstößel) mittels einer am Ventilverschlusselement (bzw. am Ventilstößel) oder am Ventilbetätigungselement (bzw. am Kolben) angreifenden Feder in seine Schließstellung vorgespannt ist und dass von den insgesamt fünf Anschlüssen des Schaltventils ein erster und zweiter Anschluss des Schaltventils miteinander verbunden und gemeinsam an eine Entlüftung angeschlossen sind, ein dritter und vierter Anschluss des Schaltventils mit dem Arbeitsraum des Dosierventils verbunden sind und ein fünfter Anschluss des Schaltventils an eine Druckfluidversorgung angeschlossen ist.

Als besonders vorteilhaft erweist es sich im Rahmen der vorliegenden Erfindung außerdem, wenn wenigstens ein Verstellelement vorgesehen ist, mit welchem sich der Querschnitt eines zur Be- und/oder Entlüftung des Arbeitsraums dienenden Verbindungskanals verändern, insbesondere verringern, lässt. Hierdurch lässt sich die Schaltcharakteristik eines erfindungsgemäßen Ventils in besonders einfacher Weise an die Materialeigenschaften von unterschiedlichen (zu dosierenden) Flüssigkeiten anpassen, was später in Zusammenhang mit der Figurenbeschreibung auch noch näher erläutert wird.

Ferner ist von Vorteil, wenn zwischen Schaltventil und Dosierventil ein Adapterstück vorgesehen ist, in welchem Verbindungskanäle ausgebildet sind, die zur fluidleitenden Verbindung von zwei Anschlüssen des Schaltventils mit dem Arbeitsraum des Dosierventils dienen.

Ergänzend kann dabei noch vorgesehen sein, dass das wenigstens eine Verstellelement in oder an dem Adapterstück angeordnet ist.

Nachfolgend werden verschiedene Ausführungsbeispiele der Erfindung anhand der Zeichnung näher erläutert. Dabei zeigt
- Fig. 1a: eine schematische Darstellung eines ersten Ausführungsbeispiels eines erfindungsgemäßen Dosierventils, bei welchem sich das Schaltventil in einer ersten Schaltstellung befindet,
- Fig. 1b: das Dosierventil aus Fig. 1a, bei welchem sich das Schaltventil in einer zweiten Schaltstellung befindet,
- Fig. 2: eine weitere (Teil-)Darstellung des ersten Ausführungsbeispiels der Erfindung zur Veranschaulichung weiterer Details,
- Fig. 3a: eine schematische Darstellung eines zweiten Ausführungsbeispiels eines erfindungsgemäßen Dosierventils, bei welchem sich das Schaltventil in einer ersten Schaltstellung befindet,
- Fig. 3b: das Dosierventil aus Fig. 3a, bei welchem sich das Schaltventil in einer zweiten Schaltstellung befindet,
- Fig. 4: eine weitere (Teil-)Darstellung des zweiten Ausführungsbeispiels der Erfindung zur Veranschaulichung weiterer Details,
- Fig. 5: eine Teildarstellung eines dritten Ausführungsbeispiels der Erfindung und
- Fig. 6: eine qualitative Darstellung der Schaltcharakteristik eines erfindungsgemäßen Dosierventils im Vergleich zu aus dem Stand der Technik bekannten Lösungen.

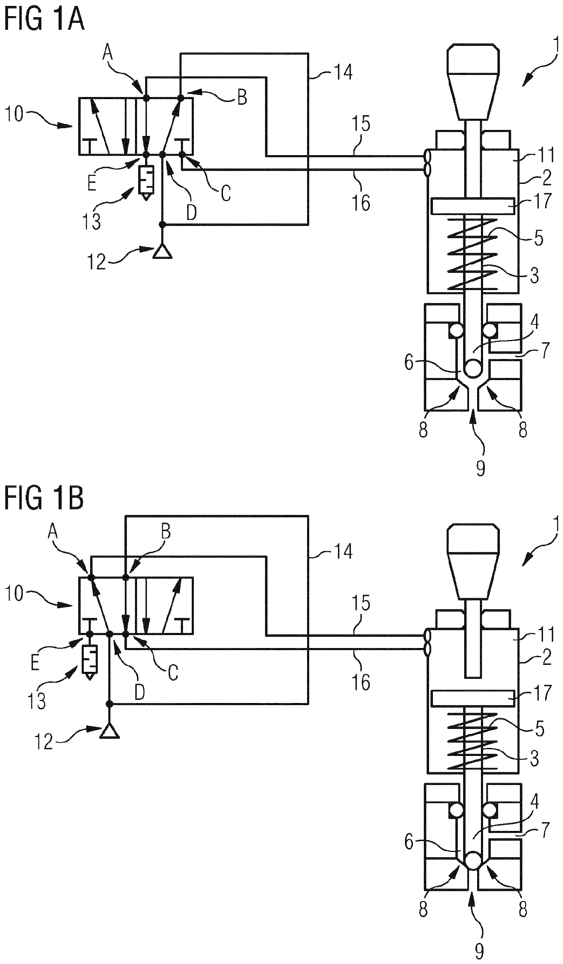

Das in den Figuren 1a und 1b - teils schematisch - dargestellte erste Ausführungsbeispiel eines erfindungsgemäßen Dosierventils 1 umfasst einen Grundkörper 2, einen innerhalb des Grundkörpers 2 linear verschiebbaren Kolben 3 (=Ventilbetätigungselement) und einen durch ein unteres Ende des Kolbens 3 ausgebildeten Ventilstö-βel 4 (=Ventilverschlusselement) in Art einer Düsennadel auf, wobei der Kolben 3 (und mit diesem der Ventilstößel 4) mit einer sich am Grundkörper 2 abstützenden Feder 5 vorliegend in die in Fig. 1a dargestellte Position vorgespannt ist, in welcher das Dosierventil 1 geöffnet ist.

Das Dosierventil 1 umfasst ferner eine Dosierkammer 6, welche über einen daran seitlich angeordneten Flüssigkeitszufuhrkanal 7 mit einem nicht dargestellten Flüssigkeitsreservoir verbunden ist, in welchem die mittels des Dosierventils 1 auf eine Oberfläche zu applizierende Flüssigkeit unter Druck vorgehalten wird, wobei es sich bei der Flüssigkeit insbesondere um eine hochviskose Flüssigkeit, wie z.B. Klebstoff, handeln kann.

Der Ventilstößel 4 ist dabei innerhalb der Dosierkammer 6 zwischen einer von einem Düsendichtsitz 8 abgehobenen Öffnungsstellung (vgl. Fig. 1a) und einer dem Düsendichtsitz 8 anliegenden Schließstellung (vgl. Fig. 1b) bewegbar, um beim Übergang aus seiner Öffnungsstellung in die Schließstellung einen Ausstoß von Flüssigkeit aus einem Düsenaustrittskanal des Dosierventils zu bewirken.

Zur pneumatischen Ansteuerung des Dosierventils 1 ist ferner ein als Magnetventil ausgeführtes Schaltventil 10 vorgesehen, welches als 5/2-Wegeventil ausgestaltet ist und mit welchem ein Arbeitsraum 11 des Dosierventils 1 wahlweise entlüftet oder mit einem Druckfluid beaufschlagt werden kann.

In dem in den Fig. 1a und 1b dargestellten ersten Ausführungsbeispiel, bei welchem der Ventilstößel 4 des Dosierventils 1 mittels der Feder 5 in seine Öffnungsstellung vorgespannt ist, sind von den insgesamt fünf Anschlüssen A, B, C, D, E des Schaltventils 1 ein erster und zweiter Anschluss B, D des Schaltventils 10 über einen Verbindungskanal 14 miteinander verbunden und gemeinsam an eine Druckfluidversorgung 12 angeschlossen sind. Ein dritter und vierter Anschluss A, C des Schaltventils 10 sind über Verbindungskanäle 15, 16 mit dem Arbeitsraum 11 des Dosierventils 1 verbunden, während ein fünfter Anschluss E des Schaltventils an eine Entlüftung 13 angeschlossen ist.

In der in Fig. 1a dargestellten Schaltstellung des Schaltventils 10 ist der Arbeitsraum 11 des Dosierventils 1 über einen einzelnen Verbindungskanal 15 mit dem entlüfteten Anschluss A des Schaltventils 10 verbunden, während der zweite zum Arbeitsraum 11 führende Verbindungskanal 16 an einem in der gegebenen Schaltstellung des Schaltventils 10 gesperrten (d.h. weder be- noch entlüfteten) Anschluss C angeschlossen ist. Diese Schaltstellung dient somit der "einfach wirkenden" Entlüftung des vorliegend oberhalb eines Kolbentellers 17 liegenden Arbeitsraums 11, so dass der Ventilstößel 4 des Dosierventils 1 mittels der Feder 5 in die Öffnungsstellung überführt wird.

In der in Fig. 1b dargestellten Schaltstellung des Schaltventils 10 ist der Arbeitsraum 11 des Dosierventils 1 gleichzeitig über zwei Verbindungskanäle 15, 16 mit den jeweils belüfteten Anschlüssen A und C des Schaltventils 10 verbunden. Diese Schaltstellung dient somit der "doppelt wirkenden" Belüftung des oberhalb des Kolbentellers 17 liegenden Arbeitsraums 11, so dass der Ventilstößel 4 des Dosierventils 1 gegen die Kraft der Feder 5 mit Wucht in seine Schließstellung überführt wird, wodurch - wie einleitend beschrieben - ein Tropfen der in der Dosierkammer 6 und dem hiermit verbundenen Flüssigkeitsreservoir befindlichen Flüssigkeit durch den Düsenaustrittskanal 9 ausgestoßen wird.

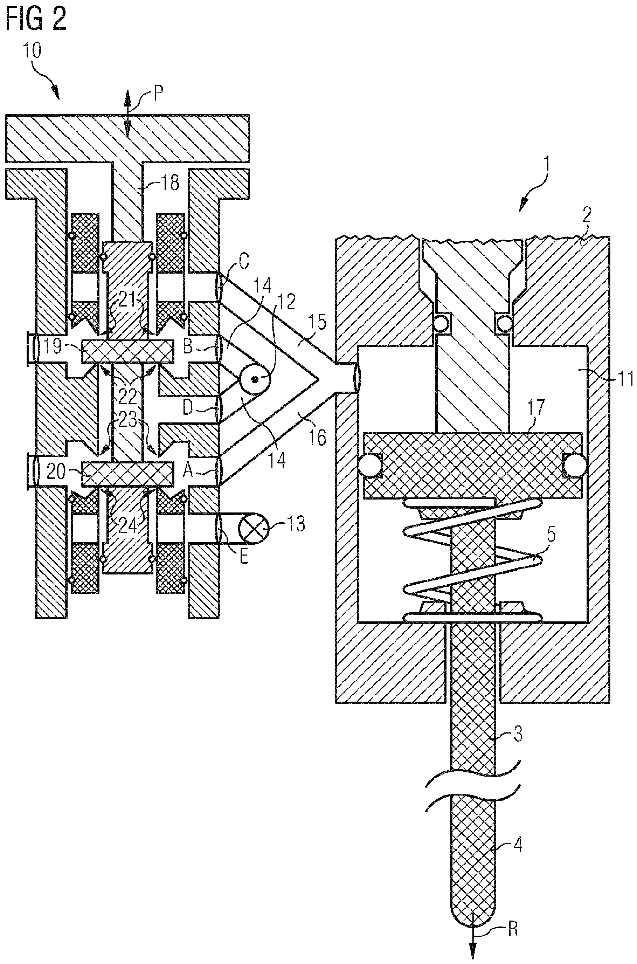

Fig. 2 zeigt eine detailliertere (Teil-)Querschnittsdarstellung durch einen Teil des Dosierventils 1 und durch einen Teil des Schaltventils 10 des ersten Ausführungsbeispiels der Erfindung.

Das dabei als Schaltventil 10 verwendete 5/2-Wegeventil ist als hochdynamisches Magnetventil mit einem gemäß Doppelpfeil P linear verschiebbaren und magnetisch betätigbaren Ventilkolben 18 ausgestaltet, wobei die zur Auslenkung des Ventilkolbens 18 vorgesehene Spule der besseren Übersichtlichkeit halber nicht dargestellt ist.

Die in Fig. 2 dargestellte Schaltstellung des Schaltventils 10 entspricht derjenigen aus Fig. 1b, bei welcher die beiden zum Arbeitsraum 11 führenden Verbindungskanäle 15, 16 beide gleichzeitig belüftet (d.h. in Fluidverbindung mit der Druckfluidversorgung 12) sind.

Das Schaltventil 10 weist zwei mit dem Ventilkolben 18 verbundene Ventilkörper 19, 20 auf, welche bei Verstellung des Ventilkolbens 18 gemäß Doppelpfeil P zwischen zwei (die Ventilverstellbarkeit nach oben und unten begrenzenden) Dichtkanten 21, 22 bzw. 23, 24 verschiebbar sind.

In der gezeigten Schaltstellung, in welcher die beiden Ventilkörper 19, 20 jeweils der unterhalb des jeweiligen Ventilkörpers 19, 20 befindlichen Dichtkante 22 bzw. 24 anliegen, steht die über den Verbindungskanal 14 gleichzeitig an zwei Anschlüssen B, D des Schaltventils 10 angeschlossene Druckfluidversorgung 12 in fluidleitender Verbindung mit den zwei weiteren Anschlüssen A, C des Schaltventils, welche wiederum über zwei Verbindungskanäle 15, 16 mit dem Arbeitsraum 11 des Dosierventils 1 verbunden sind. Der sich dabei im Arbeitsraum 11 des Dosierventils 1 aufbauende Druck beschleunigt sodann den Kolben 3 mitsamt dem an dessen Ende ausgebildeten Ventilstößel 4 in Richtung des Pfeils R bis der Ventilstößel 4 unter Bewirkung des Ausstoßes eines Flüssigkeitstropfens an dem in Fig. 2 nicht dargestellten Düsendichtsitz 8 zur Anlage kommt.

Wird nun der Ventilkolben 18 des Schaltventils 10 aus der in Fig. 2 dargestellten Schaltstellung elektromagnetisch nach oben bewegt bis die beiden Ventilkörper 19, 20 des Schaltventils 10 jeweils der oberhalb des jeweiligen Ventilkörpers 19, 20 befindlichen Dichtkante 21 bzw. 23 anliegen, dann ist der in Fig. 2 oberste Anschluss C des Schaltventils 10 gesperrt (also weder benoch entlüftet) und der Arbeitsraum 11 des Dosierventils wird ausschließlich über einen einzigen mit der Entlüftung 13 verbundenen Verbindungskanal 16 entlüftet.

Die in den Fig. 1a, 1b und 2 dargestellten Verbindungskanäle 14, 15, 16 können ggfs. auch (insbesondere im Hinblick auf deren jeweiligen Kanalquerschnitt) unterschiedlich dimensioniert sein, um die Schaltcharakteristik des Dosierventils z.B. für die Materialeigenschaften einer bestimmten Flüssigkeit zu optimieren. Ferner können im Bereich einzelner Verbindungskanäle bzw. Verbindungskanalabschnitte ggfs. auch geeignet einstellbare Verstellelemente vorgesehen sein, um den Be- oder Entlüftungsvorgang und damit die Schließ- oder Öffnungsgeschwindigkeit des Dosierventils gezielt an unterschiedliche Flüssigkeiten und deren Materialeigenschaften anpassen zu können.

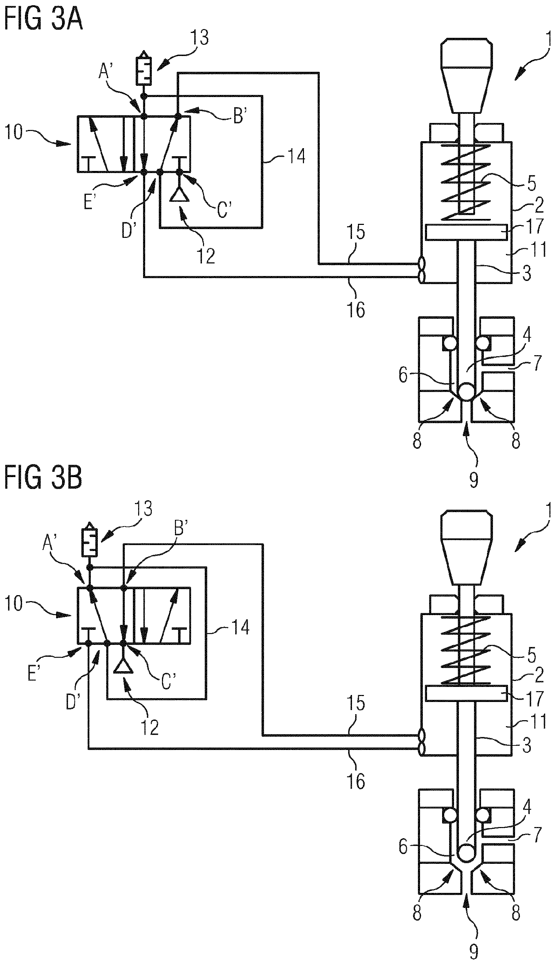

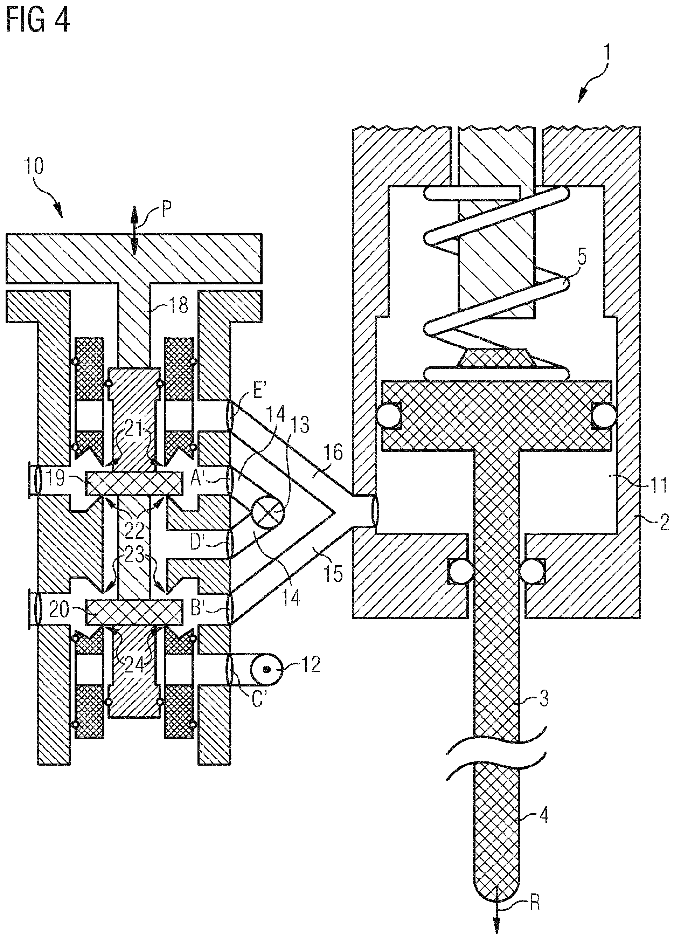

Die Fig. 3a, 3b und 4 zeigen ein zweites Ausführungsbeispiel eines erfindungsgemäßen Dosierventils 1, bei welchem Bauteile, die den im ersten Ausführungsbeispiel verwendeten Bauteilen entsprechen, mit gleichen Bezugszeichen versehen sind.

Der Ventilstößel 4 des in den Fig. 3a, 3b und 4 dargestellten Dosierventils 1 ist nun allerdings in Abweichung zum ersten Ausführungsbeispiel mittels einer den Kolben 3 von oben mit Kraft beaufschlagenden Feder 5 in seine Schließstellung vorgespannt. Ferner liegt der Arbeitsraum 11 des Dosierventils 1 nun nicht mehr oberhalb des Kolbentellers 17, sondern darunter. Außerdem sind nun von den insgesamt fünf Anschlüssen A', B', C', D', E' des Schaltventils 1 ein erster und zweiter Anschluss A', D' des Schaltventils 10 über einen Verbindungskanal 14 miteinander verbunden und gemeinsam an eine Enlüftung 13 angeschlossen. Ein dritter und vierter Anschluss B', E' des Schaltventils 10 sind über Verbindungskanäle 15, 16 mit dem Arbeitsraum 11 des Dosierventils 1 verbunden, während ein fünfter Anschluss E' des Schaltventils 10 an eine Druckfluidversorgung 12 angeschlossen ist.

In der in Fig. 3a dargestellten Schaltstellung des Schaltventils 10 ist der Arbeitsraum 11 des Dosierventils 1 gleichzeitig über zwei Verbindungskanäle 15, 16 mit den jeweils entlüfteten Anschlüssen B' und E' des Schaltventils 10 verbunden. Diese Schaltstellung dient somit der "doppelt wirkenden" Entlüftung des unterhalb des Kolbentellers 17 liegenden Arbeitsraums 11, so dass der Ventilstößel 4 des Dosierventils 1 - wenn er sich zuvor in seiner Öffnungsstellung befunden hatte - durch die Kraft der Feder 5 mit Wucht in seine Schließstellung überführt werden kann.

In der in Fig. 3b dargestellten Schaltstellung des Schaltventils 10 ist der Arbeitsraum 11 des Dosierventils 1 über einen einzelnen Verbindungskanal 15 mit dem dann belüfteten Anschluss B' des Schaltventils 10 verbunden, während der zweite zum Arbeitsraum 11 führende Verbindungskanal 16 an einem in der gegebenen Schaltstellung des Schaltventils 10 gesperrten (d.h. weder be- noch entlüfteten) Anschluss E' angeschlossen ist. Diese Schaltstellung dient somit der "einfach wirkenden" Belüftung des vorliegend unterhalb eines Kolbentellers 17 liegenden Arbeitsraums 11, so dass der Ventilstößel 4 des Dosierventils 1 gegen die Kraft der Feder 5 in die in Fig. 3b gezeigte Öffnungsstellung überführt wird.

Die Fig. 4 zeigt wiederum eine detailliertere (Teil-) Querschnittsdarstellung durch einen Teil des Dosierventils 1 und durch einen Teil des Schaltventils 10 des zweiten Ausführungsbeispiels der Erfindung.

Das dabei als Schaltventil 10 verwendete 5/2-Wegeventil ist wiederum als hochdynamisches Magnetventil mit einem gemäß Doppelpfeil P linear verschiebbaren und magnetisch betätigbaren Ventilkolben 18 ausgestaltet, wobei die zur Auslenkung des Ventilkolbens 18 vorgesehene Spule der besseren Übersichtlichkeit halber nicht dargestellt ist.

Die in Fig. 4 dargestellte Schaltstellung des Schaltventils 10 entspricht derjenigen aus Fig. 3a, bei welcher die beiden zum Arbeitsraum 11 führenden Verbindungskanäle 15, 16 beide gleichzeitig entlüftet (d.h. in Fluidverbindung mit der Entlüftung 13) sind.

Das Schaltventil 10 weist auch hier zwei mit dem Ventilkolben 18 verbundene Ventilkörper 19, 20 auf, welche bei Verstellung des Ventilkolbens 18 gemäß Doppelpfeil P zwischen zwei (die Ventilverstellbarkeit nach oben und unten begrenzenden) Dichtkanten 21, 22 bzw. 23, 24 verschiebbar sind.

In der gezeigten Schaltstellung, in welcher die beiden Ventilkörper 19, 20 jeweils der unterhalb des jeweiligen Ventilkörpers 19, 20 befindlichen Dichtkante 22 bzw. 24 anliegen, steht die über den Verbindungskanal 14 gleichzeitig an zwei Anschlüssen A', D' des Schaltventils 10 angeschlossene Entlüftung 13 in fluidleitender Verbindung mit den zwei weiteren Anschlüssen E', B' des Schaltventils, welche wiederum über zwei Verbindungskanäle 15, 16 mit dem Arbeitsraum 11 des Dosierventils 1 verbunden sind. Die dabei erfolgende Entlüftung des Arbeitsraums 11 des Dosierventils 1 sorgt - sofern sich das Dosierventil zuvor in seiner Öffnungsstellung befand - dafür, dass der Kolben 3 mitsamt dem an dessen Ende ausgebildeten Ventilstößel 4 in Richtung des Pfeils R beschleunigt wird, und zwar bis der Ventilstößel 4 unter Bewirkung des Ausstoßes eines Flüssigkeitstropfens an dem in Fig. 4 nicht dargestellten Düsendichtsitz 8 zur Anlage kommt.

Wird nun der Ventilkolben 18 des Schaltventils 10 aus der in Fig. 4 dargestellten Schaltstellung elektromagnetisch nach oben bewegt bis die beiden Ventilkörper 19, 20 des Schaltventils 10 jeweils der oberhalb des jeweiligen Ventilkörpers 19, 20 befindlichen Dichtkante 21 bzw. 23 anliegen, dann ist wiederum der in Fig. 4 oberste Anschluss E' des Schaltventils 10 gesperrt (also weder be- noch entlüftet) und der Arbeitsraum 11 des Dosierventils wird ausschließlich über den dann mit der Belüftung 13 verbundenen Verbindungskanal 15 belüftet, wodurch das Dosierventil 1 entgegen der Kraft der Feder 5 in seine Öffnungsstellung überführt wird.

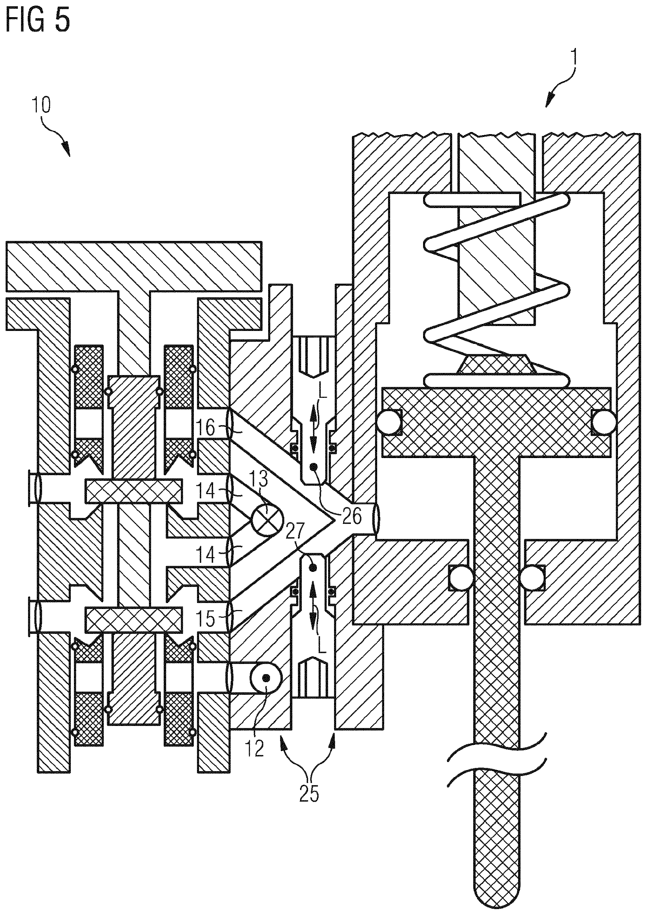

Fig. 5 zeigt - wiederum in einer Teildarstellung - ein drittes Ausführungsbeispiel eines erfindungsgemäßen Dosierventils 1 mit zugehörigem Schaltventil 10, welches im Hinblick auf die Gestaltung des Dosierventils 1 und des Schaltventils 10 exakt dem zweiten Ausführungsbeispiel gemäß Fig. 4 entspricht. Als demgegenüber neues Merkmal kommt bei dem dritten Ausführungsbeispiel nun jedoch hinzu, dass dort sämtliche Verbindungskanäle 14, 15, 16 sowie Anschlüsse für die Druckfluid- bzw. Druckluftversorgung 12 und die Entlüftung 13 in einem zwischen dem Schaltventil 10 und dem Dosierventil 1 angeordneten Adapterstück 25 vorgesehen sind, in welchem zusätzlich noch zwei (jeweils gemäß Doppelpfeil L linear verschiebbare) Verstellelemente 26, 27 vorgesehen sind, mit welchen sich der Querschnitt der Verbindungskanäle 15 und 16 einzeln verändern lässt, wodurch man Einfluss auf die Ventildynamik nehmen kann, um diese z.B. an unterschiedliche Materialeigenschaften verschiedener Flüssigkeiten anzupassen.

Beispielsweise kann es sich bei der Jet-Dosierung von (UV-)Klebstoffen als besonders vorteilhaft erweisen, den Querschnitt des im gegebenen Beispiel der Belüftung des Arbeitsraums 11 dienenden Verbindungskanals 15 mittels des in Fig. 5 unteren Verstellelements zu verringern, um einen besonders sanften bzw. gedrosselten Öffnungshub für das Dosierventil zu erreichen. Dies verringert beim Öffnen des Dosierventils die Gefahr des unbeabsichtigten "Aufziehens" von in dem Klebstoff eingeschlossenen Luftblasen.

Ferner könnten bei dem in Fig. 5 dargestellten Ausführungsbeispiel der Erfindung entsprechende Verstellelemente auch in dem die Entlüftung 13 mit zwei Anschlüssen des Schaltventils 10 verbindenden Verbindungskanal 14 vorgesehen werden. Mittels einer dort erfolgenden Querschnittsverringerung kann die Schließbewegung des Dosierventils 1 gedrosselt bzw. verlangsamt werden, wenn das Dosierventil 1 z.B. zur Applikation mittelviskoser oder niederviskoser Flüssigkeiten verwendet werden soll.

Nur der guten Ordnung halber sei ausgeführt, dass entsprechende Verstellelemente zur Einflussnahme auf die Querschnittsfläche von Verbindungskanälen selbstverständlich auch bei den Ausführungsbeispielen gemäß den Fig. 1a, 1b, 2 bzw. den Fig. 3a, 3b, 4 vorgesehen sein können, da aufgrund der erfindungsgemäßen Dosierventilausführung in allen gezeigten Varianten voneinander unabhängige Be- und Entlüftungskanäle existieren,

Im Übrigen sei angemerkt, dass mittels eines Adapterstücks 25 und des zugehörigen, als 5/2-Wegeventil ausgestalteten Schaltventils 10, wie diese in Fig. 5 in beispielhafter Ausführung dargestellt sind, auch bereits bestehende Jet-Dosierventile umgerüstet werden können, um im erfindungsgemäßen Sinne pneumatisch angesteuert zu werden.

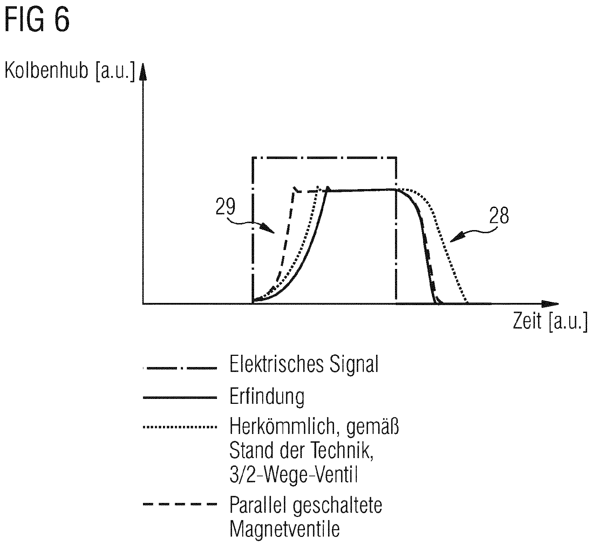

Fig. 6 zeigt schließlich noch in einer qualitativen Darstellung die Schaltcharakteristik eines erfindungsgemäßen Dosierventils im Vergleich zu aus dem Stand der Technik bekannten Dosierventilen, bei denen entweder ein 3/2-Wegeventil oder mehrere parallel geschaltete Magnetventile Verwendung finden.

Die den verschiedenen Ventiltypen zugeordneten Kurven zeigen den zeitlichen Verlauf des Kolbenhubs des Dosierventils, wobei der Maximalhub je nach konkreter Ventilgestaltung variieren kann und beispielsweise in einer Größenordnung von z.B. 500 µm liegen kann.

Im Vergleich zur vorbekannten Verwendung eines 3/2-Wegeventils weist der Verlauf des Kolbenhubs eines erfindungsgemäßen Dosierventils - wegen der für die Schließbewegung erfolgenden Verschaltung des Arbeitsraums mit zwei be- oder entlüfteten Anschlüssen des Schaltventils - eine deutlich steiler abfallende Schließflanke 28 auf, was einem besonders schnell erfolgenden Schließvorgang entspricht, wie er auch mit parallel geschalteten Magnetventilen erzielbar ist und wie er insbesondere zur Jet-Dosierung von Kleinstmengen hochviskoser Flüssigkeiten benötigt wird.

Gleichzeitig ist mit der vorliegenden Erfindung wegen der für die Öffnungsbewegung erfolgenden Verschaltung des Arbeitsraums mit nur einem be- oder entlüfteten Anschluss des Schaltventils jedoch eine relative flache Öffnungsflanke 29 erzielbar, was sich (unter wirksamer Vermeidung der Ansaugung von Luft durch den Düsenaustrittskanal) wiederum als vorteilhaft für die Jet-Dosierung von hochviskosen Flüssigkeiten erweist, wie weiter oben bereits ausgeführt.

Das in Fig. 6 daneben noch eingezeichnete elektrische (Rechteck-)Signal kennzeichnet das zur Ansteuerung des Schaltventils gegebene elektrische Steuersignal (mit einer Amplitude von z.B. 24 V und einer der Ventildynamik angepassten Einschaltdauer von beispielsweise 2 - 3 ms) .

## Patentansprüche

1. Dosierventil (1) zum Ausstoßen einer Flüssigkeit aus einem Düsenaustrittskanal (9) des Dosierventils (1), insbesondere zum dosierten und berührungslosen Auftragen einer Flüssigkeit auf eine Oberfläche, wobei das Dosierventil (1) einen Grundkörper (2), ein innerhalb des Grundkörpers (2) bewegliches Ventilbetätigungselement und ein mit dem Ventilbetätigungselement verbundenes oder durch dieses betätigbares Ventilverschlusselement aufweist, wobei das Ventilverschlusselement innerhalb einer Dosierkammer (6) zwischen einer von einem Düsendichtsitz (8) abgehobenen Öffnungsstellung und einer dem Düsendichtsitz (8) anliegenden Schließstellung bewegbar ist, um beim Übergang aus seiner Öffnungsstellung in die Schließstellung einen Ausstoß von Flüssigkeit aus dem Düsenaustrittskanal (9) des Dosierventils (1) zu bewirken, und
wobei zur pneumatischen Ansteuerung des Dosierventils (1) ein Schaltventil (10) vorgesehen ist, mit welchem ein Arbeitsraum (11) des Dosierventils (1) wahlweise entlüftet oder mit einem Druckfluid beaufschlagt werden kann,
**dadurch gekennzeichnet,**
**dass** das Schaltventil (10) als Wegeventil mit zwei Schaltstellungen und wenigstens fünf Anschlüssen (A, B, C, D, E; A', B', C', D', E') ausgestaltet und derart verschaltet ist, dass in einer ersten Schaltstellung des Schaltventils (10) der Arbeitsraum (11) des Dosierventils (1) gleichzeitig entweder mit wenigstens zwei entlüfteten oder mit wenigstens zwei mit Druckfluid beaufschlagten Anschlüssen des Schaltventils (10) verbunden ist, während in einer zweiten Schaltstellung des Schaltventils (10) der Arbeitsraum (11) des Dosierventils (1) entweder mit einem mit Druckfluid beaufschlagten oder mit einem entlüfteten Anschluss des Schaltventils (10) verbunden ist.

2. Dosierventil (1) nach Anspruch 1,
**dadurch gekennzeichnet,**
**dass** das Schaltventil (10) ein 5/2-Wegeventil ist

3. Dosierventil (1) nach Anspruch 1 oder 2,
**dadurch gekennzeichnet,**
**dass** das Ventilbetätigungselement ein innerhalb des Grundkörpers (2) linear verschiebbarer Kolben (3) ist und dass das Ventilverschlusselement ein Ventilstößel (4) ist.

4. Dosierventil (1) nach einem der vorangehenden Ansprüche,
**dadurch gekennzeichnet,**
**dass** die Dosierkammer (6) über einen Flüssigkeitszufuhrkanal (7) mit einem Flüssigkeitsreservoir verbunden ist.

5. Dosierventil (1) nach Anspruch 2,
**dadurch gekennzeichnet,**
**dass** das Ventilverschlusselement mittels einer am Ventilverschlusselement oder am Ventilbetätigungselement angreifenden Feder (5) in seine Öffnungsstellung vorgespannt ist und dass von den insgesamt fünf Anschlüssen (A, B, C, D, E) des Schaltventils (10) ein erster und zweiter Anschluss (B, D) des Schaltventils (10) miteinander verbunden und gemeinsam an eine Druckfluidversorgung (12) angeschlossen sind,
ein dritter und vierter Anschluss (A, C) des Schaltventils (10) mit dem Arbeitsraum (11) des Dosierventils (1) verbunden sind und
ein fünfter Anschluss (E) des Schaltventils (10) an eine Entlüftung (13) angeschlossen ist.

6. Dosierventil (1) nach Anspruch 2,
**dadurch gekennzeichnet,**
**dass** das Ventilverschlusselement mittels einer am Ventilverschlusselement oder am Ventilbetätigungselement angreifenden Feder (5) in seine Schließstellung vorgespannt ist und dass von den insgesamt fünf Anschlüssen (A', B', C', D', E') des Schaltventils (10) ein erster und zweiter Anschluss (A', D') des Schaltventils (10) miteinander verbunden und gemeinsam an eine Entlüftung (13) angeschlossen sind,
ein dritter und vierter Anschluss (B', E') des Schaltventils (10) mit dem Arbeitsraum (11) des Dosierventils (1) verbunden sind und
ein fünfter Anschluss (C') des Schaltventils an eine Druckfluidversorgung (12) angeschlossen ist.

7. Dosierventil (1) nach einem der vorangehenden Ansprüche,
**dadurch gekennzeichnet,**
**dass** wenigstens ein Verstellelement (26, 27) vorgesehen ist, mit welchen sich der Querschnitt eines zur Be- und/oder Entlüftung des Arbeitsraums (11) dienenden Verbindungskanals (14, 15, 16) verändern, insbesondere verringern, lässt.

8. Dosierventil (1) nach einem der vorangehenden Ansprüche,
**dadurch gekennzeichnet,**
**dass** zwischen Schaltventil (10) und Dosierventil (1) ein Adapterstück (25) vorgesehen ist, in welchem Verbindungskanäle (14, 15, 16) ausgebildet sind, die zur fluidleitenden Verbindung von zwei Anschlüssen des Schaltventils (10) mit dem Arbeitsraum (11) des Dosierventils (1) dienen.

9. Dosierventil (1) nach Anspruch 7 und Anspruch 8,
**dadurch gekennzeichnet,**
**dass** das wenigstens eine Verstellelemente (26, 27) in oder an dem Adapterstück (25) angeordnet ist.

## Claims

1. A dosing valve (1) for ejection of a liquid from a nozzle-outlet channel (9) of the dosing valve (1), especially for dosed and contactless application of a liquid onto a surface,
wherein the dosing valve (1) has a main body (2), a valve-actuating element that is movable inside the main body (2) and a valve-closing element that is joined to the valve-actuating element or can be actuated thereby,
wherein the valve-closing element can be moved inside a dosing chamber (6) between an open position lifted from a nozzle-sealing seat (8) and a closed position bearing on the nozzle-sealing seat (8), in order to achieve ejection of liquid from the nozzle-outlet channel (9) of the dosing valve (1) during the transition from its open position to the closed position, and
wherein, for pneumatic activation of the dosing valve (1), a switching valve (10) is provided, with which a working space (11) of the dosing valve (1) may be optionally vented or pressurized with a pressurized fluid,
**characterized in that**
the switching valve (10) is configured as a directional valve with two switched positions and at least five ports (A, B, C, D, E; A', B', C', D', E') and is interconnected in such a way that, in a first switched position of the switching valve (10), the working space (11) of the dosing valve (1) is simultaneously in communication either with at least two vented ports of the switching valve (10) or with at least two ports thereof pressurized with pressurized fluid, whereas, in a second switched position of the switching valve (10), the working space (11) of the dosing valve (1) is in communication either with a port of the switching valve (10) pressurized with pressurized fluid or with a vented port thereof.

2. A dosing valve (1) according to claim 1,
**characterized in that**
the switching valve (10) is a 5/2-directional valve.

3. A dosing valve (1) according to claim 1 or 2,
**characterized in that**
the valve-actuating element is a piston (3) that can be displaced linearly inside the main body (2) and **in that** the valve-closing element is a valve tappet (4).

4. A dosing valve (1) according to one of the preceding claims,
**characterized in that**
the dosing chamber (6) is in communication via a liquid-supply channel (7) with a liquid reservoir.

5. A dosing valve (1) according to claim 2,
**characterized in that**
the valve-closing element is preloaded in its open position by means of a spring (5) acting on the valve-closing element or on the valve-actuating element, and **in that**, of the five ports (A, B, C, D, E) in total of the switching valve (10), a first and second port (B, D) of the switching valve (10) are in communication with one another and are jointly connected to a pressurized-fluid supply (12), a third and fourth port (A, C) of the switching valve (10) are in communication with the working space (11) of the dosing valve (1) and
a firth port (E) of the switching valve (10) is connected to a vent (13).

6. A dosing valve (1) according to claim 2,
**characterized in that**
the valve-closing element is preloaded in its closed position by means of a spring (5) acting on the valve-closing element or on the valve-actuating element, and **in that**, of the five ports (A', B', C', D', E') in total of the switching valve (10), a first and second port (A', D') of the switching valve (10) are in communication with one another and are jointly connected to a vent (13),
a third and fourth port (B', E') of the switching valve (10) are in communication with the working space (11) of the dosing valve (1) and
a fifth port (C') of the switching valve is connected to a pressurized-fluid supply (12).

7. A dosing valve (1) according to one of the preceding claims,
**characterized in that**
at least one positioning element (26, 27) is provided, with which the cross section of a connecting channel (14, 15, 16) used for pressurization and/or venting of the working space (11) can be changed, especially reduced.

8. A dosing valve (1) according to one of the preceding claims,
**characterized in that**
between switching valve (10) and dosing valve (1), an adapter piece (25) is provided in which connecting channels (14, 15, 16) are formed that act as fluidic communication between two ports of the switching valve (10) and the working space (11) of the dosing valve (1).

9. A dosing valve (1) according to claim 7 and claim 8,
**characterized in that**
the at least one positioning element (26, 27) is disposed in or on the adapter piece (25).

## Revendications

1. Valve doseuse (1) pour éjecter un liquide à partir d'un canal de sortie de buse (9) de la valve doseuse (1), notamment pour le dosage et l'application sans contact d'un liquide sur une surface, dans laquelle la valve doseuse (1) présente un corps de base (2), un élément d'actionnement de valve qui est mobile à l'intérieur du corps de base (2) et un élément de fermeture de valve relié à l'élément d'actionnement de valve ou actionnable par celui-ci, dans laquelle l'élément de fermeture de valve est mobile à l'intérieur d'une chambre de dosage (6) entre une position ouverte relevée du siège d'étanchéité de buse (8) et une position fermée venant reposer contre le siège d'étanchéité de buse (8) pour provoquer une éjection de liquide du canal de sortie de buse (9) de la valve doseuse (1) lors du passage de sa position ouverte à la position fermée et dans laquelle pour la commande pneumatique de la valve doseuse (1) il est prévu une valve de commutation (10), grâce à laquelle un espace de travail (11) de la valve doseuse (1) peut soit être purgé, soit mis sous pression avec du fluide, **caractérisé en ce que** la valve de commutation (10) est conçue comme un distributeur avec deux positions de commutation et au moins cinq raccords (A, B, C, D, E ;A', B', C', D', E') et raccordée de telle sorte que dans une première position de commutation de la valve de commutation (10) l'espace de travail (11) de la valve doseuse (1) est relié simultanément soit à au moins deux raccords ventilés, soit à au moins deux raccords de fluide sous pression de la valve de commutation (10), tandis que dans une deuxième position de commutation de la valve de commutation (10), l'espace de travail (11) de la valve doseuse (1) est relié soit à un fluide sous pression, soit à un raccord ventilé de la valve de commutation (10).

2. Valve doseuse (1) selon la revendication 1, **caractérisée en ce que** la valve de commutation (10) est une valve 5/2 voies.

3. Valve doseuse (1) selon la revendication 1 ou 2, **caractérisée en ce que** l'élément d'actionnement de valve est un piston (3) déplaçable linéairement à l'intérieur du corps de base (2) et **en ce que** l'élément de fermeture de valve est un poussoir de valve (4).

4. Valve doseuse (1) selon une des revendications précédentes, **caractérisée en ce que** la chambre de dosage (6) est reliée via un canal d'alimentation de liquide (7) à un réservoir de liquide.

5. Valve doseuse (1) selon la revendication 2, **caractérisée en ce que** l'élément de fermeture de valve est sollicité au moyen d'un élément de fermeture de valve ou d'un ressort (5) agissant sur l'élément d'actionnement de valve dans sa position ouverte et que dans le total de cinq raccords (A, B, C, D, E) de la valve de commutation (10), un premier et un deuxième raccord (B, D) de la valve de commutation (10) sont reliés entre eux et sont raccordés conjointement à une alimentation de fluide sous pression (12), un troisième et un quatrième raccord (A, C) de la valve de commutation (10) est relié à l'espace de travail (11) de la valve doseuse (1) et un cinquième raccord (E) de la valve de commutation (10) est raccordé à un évent (13).

6. Valve doseuse (1) selon la revendication 2, **caractérisée en ce que** l'élément de fermeture de valve est sollicité dans sa position fermée au moyen d'un élément de fermeture de valve ou d'un ressort (5) agissant sur l'élément d'actionnement de valve que d'un total de raccords (A', B', C', D', E') de la valve de commutation (10) un premier et un deuxième raccord (A', D') de la valve de commutation (10) sont reliés entre eux et sont raccordés conjointement à un évent (13), un troisième et un quatrième raccord (B', E') de la valve de commutation (10) sont reliés à l'espace de travail (11) de la valve doseuse (1) et un cinquième raccord (C') de la valve de commutation est raccordé à une alimentation en fluide sous pression (12) .

7. Valve doseuse (1) selon une des revendications précédentes, **caractérisé en ce qu'**il est prévu au moins un élément de réglage (26, 27), grâce auquel la section transversale d'un canal de raccordement (14, 15, 16) servant à ventiler et/ou purger l'espace de travail (11), est modifiée, en particulier réduite.

8. Valve doseuse (1) selon une des revendications précédentes, **caractérisée en ce que** entre la valve de commutation (10) et la valve doseuse (1) est prévue une pièce d'adaptation (25), dans laquelle des canaux de liaison (14, 15, 16) sont formés, qui servent à la connexion fluidique de deux raccords de la valve de commutation (10) avec l'espace de travail (11) de la valve doseuse (1).

9. Valve doseuse (1) selon la revendication 7 et la revendication 8, **caractérisée en ce que** le au moins un élément de réglage (26, 27) est disposé dans ou sur la pièce d'adaptation (25).
